# EUROPÄISCHE PATENTSCHRIFT

(11) **EP 0 457 942 B1**
(45) Veröffentlichungstag und Bekanntmachung des Hinweises auf die Patenterteilung: **25.01.1995**
(21) Anmeldenummer: 90109725.3
(22) Anmeldetag: 22.05.1990
(51) Int. Cl.: G05B 19/4155

(54) **Steuerung für eine Werkzeugmaschine oder einen Roboter**
Control for a machine tool or a robot
Commande pour une machine-outil ou un robot

(43) Veröffentlichungstag der Anmeldung: 27.11.1991
(73) Patentinhaber: SIEMENS AKTIENGESELLSCHAFT, 80333 München (DE)
(72) Erfinder: Jartyn, Hermann, Dipl.-Ing. (FH), D-8602 Burghaslach (DE)

(56) Entgegenhaltungen:
- US-A- 4 314 329
- US-A- 4 716 516

## Beschreibung

Die Erfindung bezieht sich auf eine Steuerung für eine Werkzeugmaschine oder einen Roboter mit einem ein Teileprogramm und eine Antriebssteuerung aufweisenden numerischen Steuerteil, wobei die Antriebssteuerung über mindestens zwei Regelkreise zur Regelung der Antriebssysteme der Werkzeugmaschine oder des Roboters verfügt und wobei die Soll-Istwertsignale der Regelkreise über Digital-Analog-Wandler umsetzbar sind.

Um eine genaue Positionierung der Achsen von Werkzeugmaschinen oder Robotern zu gewährleisten, sind Steuerungen der eingangs genannten Art so ausgebildet, daß eine Regelung der Ist-Lagen aller Achsen auf vorgegebene Soll-Lagen hin erfolgt. Der numerische Steuerteil der zu steuernden Systeme besteht dabei im wesentlichen aus einem Teileprogramm und aus einer Antriebssteuerung bzw. Achsensteuerung. Das Teileprogramm enthält dabei alle Informationen, die notwendig sind, um einen bestimmten Bearbeitungsablauf durchzuführen. Es kann über externe Datenträgereinrichtungen, beispielsweise über Programmiergeräte ein Magnetband oder ein Diskettenlaufwerk, in die Steuerung eingelesen oder von Hand über die Tastatur der Bedientafel in die Steuerung eingegeben werden. Über die Bedientafel können auch alle sonstigen Informationen, wie Werkzeugdaten, Korrekturwerte und Maschineneinrichtedaten eingegeben werden. Schließlich ist es auch noch möglich, die Programmdaten direkt aus den Speicher eines Fertigungsleitrechners in die numerische Steuerung zu übermitteln.

Die vom Teileprogramm aufbereiteten Sollwerte für die Antriebe der zu regelnden Systeme werden an die jeweiligen Regelkreise der Antriebssteuerung übergeben und von dieser über nachgeschaltete Digital-Analog-Wandler und Leistungsstufen an die Antriebe weitergeleitet.

An die Antriebssysteme sind - in der Regel inkrementale und/oder absolute - Meßeinrichtungen gekoppelt, die die Istwerte an die Regelkreise der Antriebssteuerung geben. Über die Antriebssteuerung werden also die Antriebe einer Werkzeugmaschine oder eines Roboters durch Soll-Istwert-Vergleich geregelt.

Neben den zu regelnden Antrieben können Werkzeugmaschinen oder Roboter weitere Einrichtungen aufweisen, die zwar ihre Funktion in Abhängigkeit von Betriebsparametern der Werkzeugmaschine oder des Roboters erfüllen müssen, die jedoch keiner Regelung bedürfen. Solche Einrichtungen können beispielsweise Druckpumpen, Proportionalventile, elektrische Schalter etc. sein. So muß beispielsweise während des Betriebs einer Presse ständig eine Ölpumpe mitlaufen, um einen Schmierfilm für den Kolben der Presse zu erzeugen, gleichzeitig könnte auf einem Display angezeigt werden, daß die Ölpumpe eingeschaltet ist.

Diese Einrichtungen bedürfen also lediglich einer Versorgungsspannung bzw. eines digitalen Steuersignals um ihre Funktion zu erfüllen. Diese elektrischen Signale mußten bisher entweder von der Bedienperson gesondert zugeschaltet werden, oder es mußte dafür eine zusätzliche externe Hardware eingesetzt werden, beiispielsweise in Form von speicherprogrammierbaren Steuerungen, oder im einfachsten Fall über eine Konstantspannungsquelle, die beispielweise mit einer Batterie und einem Potentiometer realisiert sein kann.

Aufgabe der Erfindung ist es, Steuersignale für weitere Einrichtungen über den numerischen Steuerteil von Werkzeugmaschinen oder Robotern auszugeben.

Gemäß der Erfindung wird diese Aufgabe dadurch gelöst, daß über mindestens einen der Regelkreise mindestens ein vorgebbares Sollwertsignal als Steuersignal an weitere Einrichtungen weitergeschaltet wird, wobei die Istwertsignale eines jeweiligen, für mindestens ein Steuersignal verwendeten Regelkreises, auf einen vorgegebenen Wert, vorzugsweise auf Null gesetzt sind.

Um eine Analogspannung für eine weitere Einrichtung zu erhalten, ist es vorteilhaft, wenn ein Steuersignal an einen Digital-Analog-Wandler weitergeschaltet wird, so daß das Steuersignal am Ausgang des Analogwandlers als Steuerspannung abgreifbar ist. Da zur Regelung der Antriebe einer Werkzeugmaschine oder eines Roboters die Sollwerte der herkömmlich verwendeten Regelkreise sowieso über Digital-Analog-Wandler geführt werden, läßt sich diese Ausführungsform sehr einfach realisieren. Die für die Regelung notwendigen Digital-Analog-Wandler sind zudem gewöhnlich auf Baugruppenträgern untergebracht, auf denen freie Steckplätze für weitere Digital-Analog-Wandler vorgesehen sind. Die Steuersignale können also auf einen zusätzlich gesteckten Digital-Analog-Wandler geführt werden oder es können freie Ein- und Ausgänge von bereits für die Regelung verwendeten Digital-Analog-Wandlern benutzt werden.

Ein jeweiliger Wert eines Steuersignals kann dabei über das Teileprogramm der numerischen Steuerung vorgegeben werden. Dazu ist im Teileprogramm ein zusätzlicher Befehl vorgesehen. Es ist aber auch möglich, daß die Werte der Steuersignale vom Teileprogramm unter Berücksichtigung von Betriebsparametern der Werkzeugmaschine oder des Roboters berechnet werden. Wenn sich beispielsweise nach dem Teileprogramm die Geschwindigkeit des Pressenkolbens erhöht, so kann über das Teileprogramm gleichzeitig der Wert des Steuersignals für die Ölpumpe erhöht und damit der von dieser erzeugte Schmierfilm intensiviert werden.

Es ist weiterhin vorteilhaft, wenn der Wert eines jeweiligen Steuersignals über ein Bediengerät jederzeit vorgebbar ist. Die weiteren Einrichtungen können dabei vom Anwender jederzeit angesteuert werden und gegebenenfalls können die vom Teileprogramm vorgegebenen Werte der Steuersignale korrigiert werden.

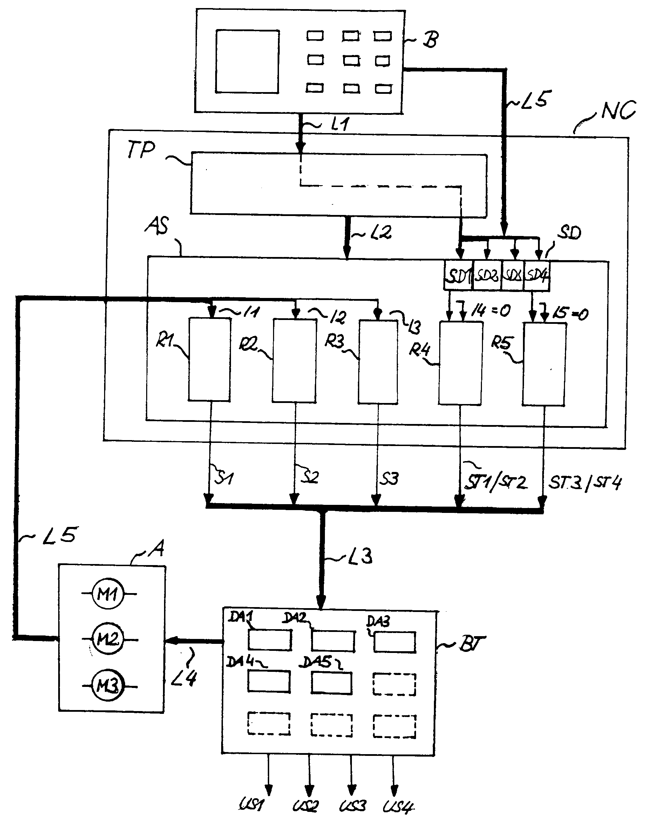

Ein Ausführungsbeispiel der Erfindung ist in der Zeichnung dargestellt und wird im folgenden näher erläutert.

Die Darstellung zeigt in Form eines Blockschaltbilds eine numerische Steuerung NC mit einem Bediengerät B das durch einen Bildschirm und ein Tastenfeld angedeutet ist. Das Bedienfeld ist mit dem Teileprogramm TP des numerischen Steuerteils NC über ein erstes Leitungssystem L1, das in Form eines Bussystems ausgeführt sein kann, verbunden. Der numerische Steuerteil NC weist ein Teileprogramm TP sowie eine Antriebs- oder Achsensteuerung AS auf. Die Antriebssteuerung AS verfügt über fünf Regelkreise R1...R5, die in Hard- oder Software realisiert sein können. Ein drittes Leitungssystem L3 verbindet den numerischen Steuerteil NC mit einem Baugruppenträger BT auf dem fünf Digital-Analog-Wandler DA1...DA5 gesteckt sind. Auf dem Baugruppenträger BT sind weitere vier Steckplätze - gestrichelt gezeichnet - beispielsweise für weitere Digital-Analog-Wandler vorhanden. Über das vierte Leitungssystem L4 ist der Baugruppenträger mit dem Antriebssystem A der Werkzeugmaschine oder des Roboters, das über drei Servomotoren M1, M2, M3 verfügt, verbunden. Auf ein in der Regel vor die Antriebssysteme A zu schaltendes Leistungsteil wurde der Übersichtlichkeit halber verzichtet. Ein fünftes Leitungssystem L5 verbindet das Antriebssystem A mit der Antriebssteuerung AS.

Über das Bediengerät B können die Programmdaten für eine zu steuernde Werkzeugmaschine oder einen Roboter eingelesen werden. Die im Teileprogramm TP aufbereiteten Programmdaten werden an die Antriebssteuerung oder Achsensteuerung AS des numerischen Steuerteils NC weitergegeben. Im Ausführungsbeispiel wird angenommen, daß von einer Werkzeugmaschine drei Antriebe über die Motoren M1...M3 zu regeln sind. In der Antriebssteuerung AS werden dazu die drei Regelkreise R1, R2, R3 verwendet. Die Regelkreise R1, R2, R3 fragen zyklisch die aufbereiteten Programmdaten des Teileprogramms TP ab und geben sie als Solldaten S1, S2, S3 über das Leitungssystem L3 an die Digital-Analog-Wandler DA1, DA2, DA3 weiter. Die Analogspannungen der Digital-Analog-Wandler DA1, DA2, DA3 werden über das Leitungssystem L4 an die Antriebe A der Werkzeugmaschine weitergegeben. Die Istwerte I1, I2, I3 der Antriebssysteme A werden über nicht gezeigte, beispielsweise inkrementale Wegmeßeinrichtungen erfaßt und über das Leitungssystem L5 an die Regelkreise R1, R2, R3 weitergegeben.

Im Ausführungsbeispiel ist jedem der Regelkreise R1...R5 ein Digital-Analog-Wandler DA1...DA5 zugeordnet. Ein Digital-Analog-Wandler DA1...DA5 besitzt jedoch in der Regel mehrere Ein- und Ausgänge, so daß ein Digital-Analog-Wandler DA1...DA5 die Signale mehrerer Regelkreise R1...R5 verarbeiten könnte.

Das, der Übersichtlichkeit halber nicht dargestellte Betriebssystem eines numerischen Steuerteils NC einer Werkzeugmaschinen- oder Robotersteuerung, ist in der Regel in der Lage oder kann zumindest dafür vorgesehen werden, mehrere Regelkreise R1...R5 zu verwalten, als für die Anzahl der zu regelnden Antriebssysteme A benötigt werden. Die "überflüssigen" Regelkreise bleiben dann bei herkömmlichen numerischen Steuerungen unbenutzt. Im vorliegenden Ausführungsbeispiel werden von den fünf Regelkreisen R1...R5 lediglich die drei Regelkreise R1...R3 zur Regelung benutzt.

Werkzeugmaschinen oder Roboter weisen jedoch neben den zu regelnden Antriebssystemen A weitere Einrichtungen, wie beispielsweise Druckpumpen, Ventilatoren, Schaltglieder, Ventile etc auf, die lediglich digitale oder analoge Steuersignale ST1...ST4 benötigen und nicht geregelt werden müssen. Zur Ansteuerung dieser weiteren Einrichtungen werden nun die zwei verbleibenden Regelkreise R4,R5 der Antriebssteuerung AS verwendet. Da die weiteren Einrichtungen nur gesteuert, nicht aber geregelt werden müssen, werden die Istwerte I4...I5 der Regelkreise R4 und R5 auf einen vorgegebenen Wert, vorzugsweise auf Null gesetzt.

Die Übergabe der Werte der Steuersignale ST1...ST4 an die Regelkreise R4, R5 wird dabei über einen in der Antriebssteuerung AS vorgesehenen Steuerdatenbereich SD vorgenommen. Die Steuerdaten SD1...SD4 können vom Anwender über das Bediengerät B und das fünfte Leitungssystem L5 direkt an den Steuerdatenbereich SD der Antriebssteuerung AS gegeben werden, sie können aber auch in das Teileprogramm TP mit einem speziell dafür vorzusehenden Befehl eingeschrieben werden und werden dann beim Programmablauf direkt vom Teileprogramm TP an den Steuerdatenbereich SD übergeben. Die Steuerdaten SD1...SD4 können aber auch vom Teileprogramm TP unter Berücksichtigung von Betriebsparametern bzw. Betriebszuständen der Werkzeugmaschine oder des Roboters berechnet werden.

Die Regelkreise R4 und R5 können so ausgeführt sein, daß jeder Regelkreis R4, R5 mehrere Steuerdaten SD1...SD4 als Steuersignale, beispielsweise seriell, ausgeben kann. Der Regelkreis R4 kann die Steuersignale ST1, ST2 und der Regelkreis R5 die Steuersignale ST4, ST5 ausgeben. Die Steuersignale ST1...ST5 werden über vorgebbare Ein-Ausgänge der Digital-Analog-Wandler DA4, DA5 in die Steuerspannungen US1...US4 gewandelt.

Angenommen, vom Teileprogramm TP wird für den Regelkreis R1, der für den Hauptantrieb einer Presse zuständig sei, eine höhere Geschwindigkeit vorgegeben, so kann vom Teileprogramm TP gleichzeitig ein größerer Wert über die Steuerdaten SD1...SD4 für die Schmiermittelpumpe des Pressenkolbens vorgegeben werden. Dieser Wert wird beispielsweise an das Steuerdatum SD1 übergeben, wo er vom Regelkreis R4 zyklisch ausgelesen und als Steuersignal ST1 über das Leitungssystem L3 an den beispielsweise dafür vorgesehenen Digital-Analog-Wandler DA4 weitergeleitet wird. Am Ausgang des Digital-Analog-Wandlers DA4 liegt dann eine Steuerspannung US1 an, mit der die Schmiermittelpumpe gegebenenfalls über einen dazwischengeschalteten Leistungsteil betrieben wird.

Mit den bei Werkzeugmaschinen üblichen Versorgungsspannungen der Digital-Analog-Wandler ist es möglich, Analogspannungen zwischen +/-10 V mit einer im Millivoltbereich liegenden Genauigkeit auszugeben. Da die Istwert-Eingänge I4, I5 der Regelkreise R4, R5 auf einen vorgegebenen Wert, vorzugsweise auf Null gesetzt sind, wirken die Regelkreise R4, R5 wie Schalter, die die vorgegebenen Steuerdaten SD1...SD4 mit einem konstanten Faktor als Steuersignale ST1...ST4 weiterschalten. Ein einmal berechneder oder vorgegebener Spannungswert kann zyklisch, beispielsweise alle 7 Millisekunden über die Digital-Analog-Wandler durchgeschaltet werden. Die Zuordnung der Regelkreise R1...R5 zu den Digital-Analog-Wandlern DA1...DA5 ist variabel und kann im laufenden Betrieb geändert werden.

## Patentansprüche

1. Steuerung für eine Werkzeugmaschine oder einen Roboter mit einem, ein Teileprogramm (TP) und eine Antriebssteuerung (AS) aufweisenden numerischen Steuerteil (NC), wobei die Antriebssteuerung (AS) über mindestens zwei Regelkreise (R1...R5) zur Regelung der Antriebssysteme (A) der Werkzeugmaschine oder des Roboters verfügt und wobei die Soll-Istwertsignale (S1...S5, I1...I5) der Regelkreise (R1...R5) über Digital-Analog-Wandler (DA1...DA5) umsetzbar sind, **dadurch gekennzeichnet**, daß über mindestens einen der Regelkreise (R1 ...R5) mindestens ein vorgebbares Sollwertsignal als Steuersignal (ST1...ST4) an weitere Einrichtungen (BT) weitergeschaltet wird, wobei die Istwertsignale (I4...I5) eines jeweiligen, für mindestens ein Steuersignal (ST1...ST4) verwendeten Regelkreises (R4...R5) auf einen vorgegebenen Wert, vorzugsweise auf Null gesetzt sind.

2. Steuerung nach Anspruch 1, **dadurch gekennzeichnet**, daß mindestens ein Steuersignal (ST1...ST4) an einen Digital-Analog-Wandler (DA1...DA5) weitergeschaltet wird und an dessen Analog-Ausgang als Steuerspannung (US1...US4) abgreifbar ist.

3. Steuerung nach Anspruch 1 oder 2, **dadurch gekennzeichnet**, daß der Wert eines jeweiligen Steuersignals (ST1...ST4) vom Teileprogramm (TP) vorgegeben wird.

4. Steuerung nach Anspruch 3, **dadurch gekennzeichnet**, daß der Wert eines jeweiligen Steuersignals (ST1...ST4) vom Teileprogramm (TP) unter Berücksichtigung von Betriebsparametern der Werkzeugmaschine oder des Roboters berechnet wird.

5. Steuerung nach einem der vorstehenden Ansprüche, **dadurch gekennzeichnet**, daß der Wert eines jeweiligen Steuersignals (ST1...ST4) über ein Bediengerät (B) vorgebbar ist.

## Claims

1. Control for a machine tool or a robot having a numerical control part (NC) which has a parts program (TP) and a drive control (AS), with the drive control (AS) being provided with at least two control loops (R1...R5) for the control of the drive systems (A) of the machine tool or the robot and with it being possible to convert the desired-actual value signals (S1...S5, I1...I5) of the control loops (R1...R5) by way of digital-analog-converters (DA1...DA5), characterised in that by way of at least one of the control loops (R1...R5) at least one preselectable desired value signal is relayed as a control signal (ST1...ST4) to further devices (BT), with the actual value signals (I4...I5) of a respective control loop (R4...R5) used for at least one control signal (ST1...ST4) being set to a preselected value, preferably to zero.

2. Control according to claim 1, characterised in that at least one control signal (ST1...ST4) is relayed to a digital-analog converter (DA1...DA5) and can be taken off at the analog-output thereof as a control voltage (US1...US4).

3. Control according to claim 1 or 2, characterised in that the value of a respective control signal (ST1...ST4) is preselected by the parts program (TP).

4. Control according to claim 3, characterised in that the value of a respective control signal (ST1...ST4) is calculated by the parts program (TP) in consideration of operating parameters of the machine tool or the robot.

5. Control according to one of the preceding claims, characterised in that the value of a respective control signal (ST1...ST4) can be preselected by way of an operator device (B).

## Revendications

1. Commande pour une machine-outil ou un robot, comportant une partie numérique de commande (NC) comportant un programme de pièce (TP) et une commande d'entraînement (AS), la commande d'entraînement (AS) disposant d'au moins deux boucles de régulation (R1 à R5) destinées à réguler les systèmes d'entraînement (A) de la machine-outil ou du robot et les signaux (S1 à S5, I1 à I5) des valeurs de consigne et des valeurs instantanées, des boucles (R1 à R5) de régulation étant susceptibles d'être convertis par des convertisseurs numérique-analogique (DA1 à DA5), caractérisée en ce qu'au moins un signal prescriptible de valeur de consigne prédéterminé est susceptible d'être transmis, en tant que signal de commande (ST1 à ST4) à d'autres dispositifs (BT) par l'intermédiaire d'au moins l'une des boucles de régulation (R1 à R5), alors que les signaux des valeurs instantanées (I4... I5) d'une boucle de régulation (R4, R5) utilisée pour au moins un signal (ST1 à ST4) de commande sont positionnés à une valeur prescrite, de préférence 0.

2. Commande suivant la revendication 1, caractérisée en ce qu'au moins un signal de commande (ST1 à ST4) est transmis à un convertisseur numérique-analogique (DA1 à DA5) et peut être prélevé en tant que tension de commande (US1 à US4) à sa sortie de signaux analogiques.

3. Commande suivant la revendication 1 ou 2, caractérisée en ce que la valeur d'un signal de commande (ST1 à ST4) est prescrite par le programme (TP) de pièce.

4. Commande suivant la revendication 3, caractérisée en ce que la valeur d'un signal de commande (ST1 à ST4) est calculée par le programme de pièce (TP) en tenant compte de paramètres de fonctionnement de la machine-outil ou du robot.

5. Commande suivant l'une des revendications précédentes, caractérisée en ce que la valeur d'un signal de commande (ST1 à ST4) peut être prescrite par un appareil de contrôle (B).
